Europäisches Patentamt

(19) European Patent Office

Office européen des brevets

(11) Publication number: **0 121 757**
A1

# (12) EUROPEAN PATENT APPLICATION

(21) Application number: **84102363.3**

(22) Date of filing: **05.03.84**

(51) Int. Cl.³: **H 04 N 7/18**

(30) Priority: **11.03.83 IT 2004783**

(43) Date of publication of application: **17.10.84**
**Bulletin 84/42**

(84) Designated Contracting States: **BE DE FR GB NL**

(71) Applicant: **COMELIT Compagnia Elettronica Italiana
S.p.A., I-24020 Rovetta S. Lorenzo (Bergamo) (IT)**

(72) Inventor: **Brasi, Pier Antonio, Via Ghirambelli, 20,
I-24023 Clusone (Bergamo) (IT)**

(74) Representative: **Dr. Ing. A. Rachell & C., Viale San
Michele del Carso, 4, I-20144 Milano (IT)**

(54) **A method for processing useful signals in a four-wire videointerphone and relative circuitry.**

(57) This invention relates to a method for processing useful
signals in a four-wire (P, N, V1, V2) videointerphone system
further including as many wires as the connected inside
monitor apparatuses, in which the functions of:

(a) audio call signal;

(b) phonic exchange for forward and backward messages;

(c) transmission of the door lock opening signal; and

(d) transmission and reception of the video signal
between the outside central unit and at least one inside
monitor apparatus, are performed. It is characterized in that
power is supplied through two wire cables (P, N), the audio
call signal and phonic exchange for forward and backward
messages as well as transmission of door opening signal
is supplied through a wire (C1) and finally the video signals,
as taken by the television camera (TC) are resolved by a
video-differential amplifier device into two complementary
signals and supplied in analogue form on two standard
wires (V1, V2) to the inside monitor apparatuses.

Applicant:

COMELIT Compagnia Elettronica Italiana S.p.A.

24020 ROVETTA S. LORENZO (Bergamo) Italy

"A METHOD FOR PROCESSING USEFUL SIGNALS IN A FOUR-WIRE VIDEOINTERPHONE AND RELATIVE CIRCUITRY".

This invention relates to a method and relative circuitry for processing useful signals in a videointerphone system using only four wires in addition to $n$ wires for connection with $n$ inside monitor apparatuses.

Usually, conventional interphone systems provide four common wires plus a selection and call wire, while a conventional videointerphone system requires at least eight wires plus a coaxial wire for video signal transmission. A particularly cumbersome and expensive wire assembly results therefrom. The installation of videointerphone systems is made thereby hard-working, particularly where an interphone system has been already installed in previously built houses or buildings, as a coaxial cable has to be installed as well as further wires, which

– 2 –

involves easily foreseeable problems.

Attempts have already been made to install a videointerphone system by using the pre-existent wires of an interphone system between the outside central unit and inside monitor apparatuses. However, an approach has involved the necessity of providing an intermediate auxiliary exchange unit which is connected to the outside unit through twelve wires and a coaxial cable. This still involves some cost and complexity in installation.

Moreover, the video signal is transmitted as modulated and is demodulated by the monitor apparatus, whereby the use is required of particularly complicated and expensive modulating, demodulating and amplifying devices, thus making the whole system expensive.

Therefore, it is the object of the present invention to provide a method and relative circuitry enabling to install a videointerphone system also in previously built houses or buildings, by taking advantage of the previously installed wires for an interphone system without requiring any further intermediate device or auxiliary connection, thus making the installation thereof extremely economical in pre-existent interphone systems.

It is an auxiliary object of the invention to provide as well a circuitry enabling to keep the image secret between the outside unit and inside monitor apparatus.

When considering the functions that a videointerphone system should perform, that is:

(a) audio call signal;

(b) phonic exchange for forward and backward messages;

(c) transmission of the door opening signal; and

(d) transmission and reception of the video signal;

the above specified object is achieved by providing that power is supplied through two of the provided wires, while the signals relating to the phonic exchange for the forward and backward messages along with the audio call signal and door opening signal are transmitted on a single wire, finally providing the supply of the video signal on further two wires, resolving the signal supplied by the television camera into two complementary signals through a video-differential amplifier, processing the same in analogue form. Of course, the video signal is reformed or recombined by the inside monitor apparatus by comparing the two complementary signals on the wires through a video-differential amplifier.

Thus, the circuitry provides a video-differential amplifier with two complementary outputs both in the outside central unit and in each inside monitor apparatus.

An improvement provides that in each inside monitor apparatus at the wires for the transmission of the complementary video signals a switch device is provided, which is also connected to power, to enable supply of video signals to the kinescope of the inside monitor apparatus only according to specific conditions.

A preferred solution contemplates that in said outside central unit a timer device is provided, acting on the power of said inside monitor apparatus, so as to cause a predetermined time interval, during which said inside monitor apparatus receives the video signal supplied by the television camera.

A solution provides that said timer further comprises a RC circuit for operation when in said outside unit a pushbutton is pressed for calling a second inside monitor apparatus, while a connection is in course with a first inside monitor apparatus, so as to cause a voltage drop for a predetermined time interval.

A preferred solution provides that said inside monitor apparatus has a switch device therein at the supply wires, so as to sense the lowering in supply level and signal it to the other components of the apparatus, thus allowing to keep the above mentioned image secret.

Special improvements provide the use of a filter in the monitor apparatus and in the outside control unit and a decoupling element with a ratio of 1:1 between power supply and the part performing the audio call signal, phonic exchange for the forward and backward messages and transmission of door opening signal.

The invention will now be further described with reference to an exemplary embodiment as schematically shown in the accompanying drawings, in which:

Fig. 1 is a general block diagram for the elements comprising the circuit for a single user;

Fig. 2 is a block diagram for the connection of a plurality of users,

Fig. 3 is a view of the interesting parts according to the invention for the circuit provided in the outside central unit;

Fig. 4 is a view showing the circuit part required according to the present invention in the inside monitor apparatus;

Fig. 5 is a view showing the power waveform according to an improvement of the invention for enabling to keep the image secret;

Fig. 6 is a view showing the waveforms relative to the resolved video signal according to the present invention; and

Fig. 7 is a view showing the improvement to the circuit relative to the video signal where a plurality of inside monitor apparatuses should be required.

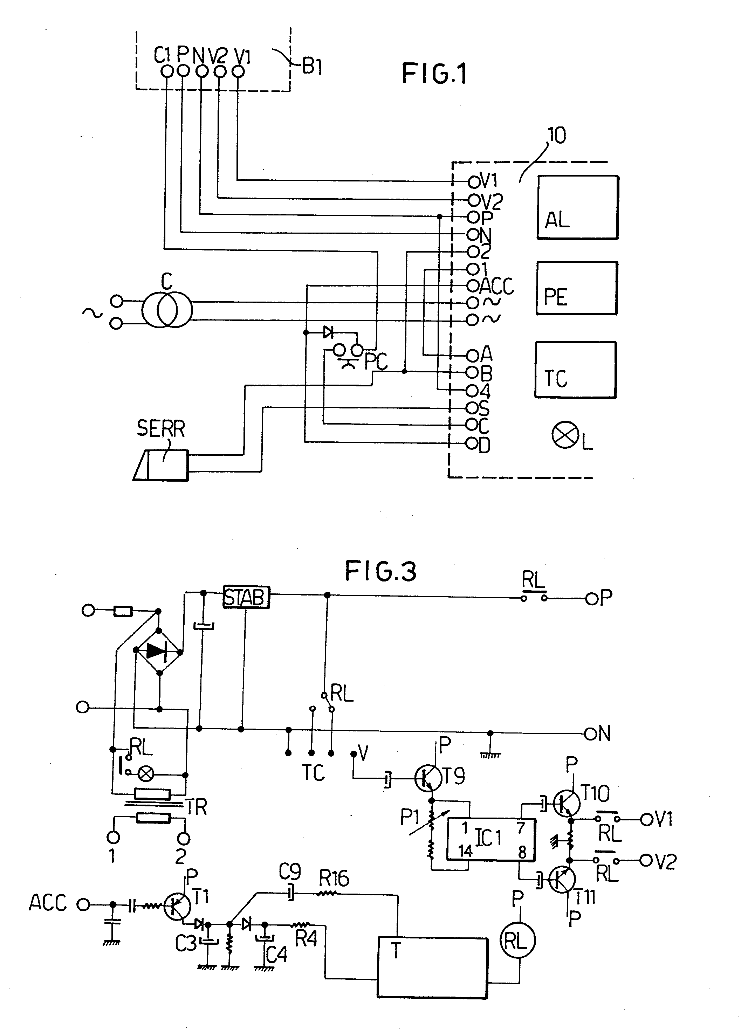

In the present invention, the basic functions required in a videointerphone are provided by a circuit using four standard one-pole wires plus one wire for each connected user for the connections between outside control unit and inside monitor apparatuses. The whole assembly is supplied by a transformer having its secondary winding at 24 Volts. Referring now to Fig. 1, reference numeral 10 designates the outside central unit comprising a supply exchange AL, a television camera TC, an illumination lamp L, call pushbuttons PC and a system for: a) audio call signal supplied from the central unit to the specific called monitor apparatus, b) exchange of audio forward and backward messages between the central unit and inside monitor apparatus, c) opening of door lock SERR and possible further service by the use of two one-pole wires. Said system hereinafter will be referred to as "electronic doorkeeper circuit PE" and will not described in this application. Infact interphone systems performing the above mentioned functions a), b) and c) with two wires plus n wires according to the number of the inside monitors are already known. When considering only one user, among the five wires provided, two are used for supply (P and N), two (V1 and V2) for image transmission, and one for connection with each inside monitor apparatus for phonic call, door opening. Therefore, a system of four plus n wires is provided wherein n is the number of users. These latter wires are already usually required for an interphone system and accordingly can be already installed in existing structures.

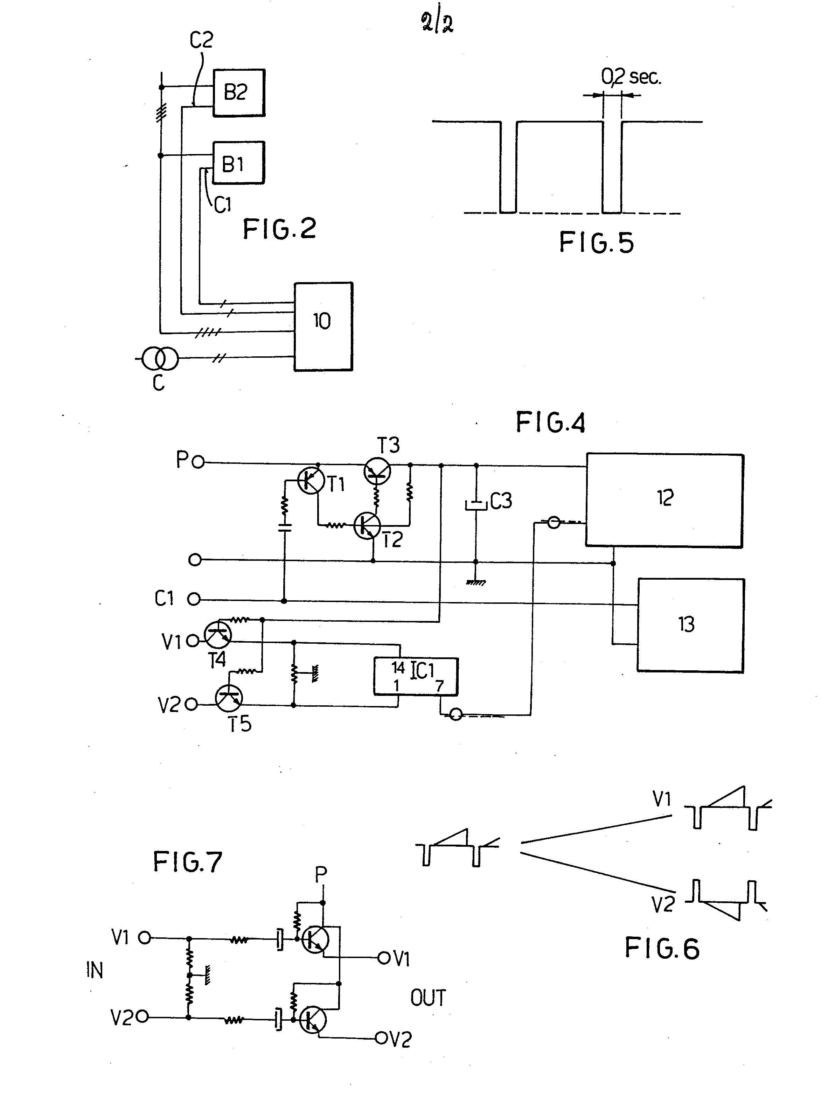

Fig. 2 is a block diagram showing the situation where two users B1 and B2 are provided; as it will be seen there is one plus wire for calling of the second user.

Consider now the case of inoperative system and a user wishing to be connected with an inside monitor apparatus by pressing the corresponding call pushbutton PC in the outside central unit. By pushbutton pressing and through the terminal D connected to the electronic doorkeeper PE a square wave signal is supplied to the corresponding monitor apparatus causing the transmission of the acoustical signal. Through the connection D-ACC (Fig. 1), this signal arrives at the supply energizing a timer device to be further shown in Fig. 3. When aconsidering the input ACC in said figure, the square wave from said electronic doorkeeper PE saturates the transistor T1 (of BC327 type) with resulting charge of capacitors C3 and C4. The time constant of C4 and R4 determines the containment time for relay RL through the timer T. For example, if C4 is 100 MF and R4 is 220 Kohm, the time constant is 90 seconds.

Once the timer is energized, the following is obtained:
- presence of stabilized voltage at supply terminal P;
- switching on of television camera TC and lamp L; and - connection of V1 and V2 to transistors T10 and T11 of Fig. 3 (for example both of BF 258 type).

Consider now the inside monitor apparatus, the essential circuitry of which is shown in Fig. 4. The simultaneous presence of call square wave (wire input C1) and supply voltage (D.C. 22 V) at input P (+) causes the saturation of transistor T1 (for example of BC327 type), thus closing the electronic switch comprising the transistors T2 (for example of BC337 type) and T3 (for example of BD440 type). Closure of transistor T3 supplies the power voltage to the relative video circuitry. The kinescope is then turned on.

Now the description will be given as to how the transmission and reception of the video signal is enabled in the inside monitor apparatus through two unshielded one-pole wires. The analogue signal from the television camera TC (Fig. 3) is an analogue signal with negative synchronism. Through the adaptor comprising a transistor T9 (for example of BC337 type) it reaches the terminals of a potentiometer P1 and the input pins of the two complementary output video-differential amplifier IC1, formed by a LM733. The signals from pins 7 and 8 are shown in Fig. 6.

Through the impedance adaptors comprising the transistors T10 and T11, these signals are supplied to the outputs V1 and V2 and then to the wires to the inside monitor apparatus.

In the monitor apparatus of Fig. 4 the two signals are supplied via the switch means comprising the transistors T4 and T5 (for example of BC337 type) to the inputs to the differential

amplifier IC1 identical to that in the outside central unit (for example formed by a LM733).

From the positive output of IC1, from said pin 7, the signal is taken for supply to the kinescope 12 and to all the circuit concerning the processing of the video signal. By this circuit transmission is obtained for a video signal without any use of a coaxial cable while maintaining an unreflective image with a pass band of 3-4 MHz. The portion concerning the call, phonic exchange and door opening is only schematically shown, as forming part of said electronic doorkeeper PE.

The device provides an improvement to the circuit for keeping the image secret. As above mentioned, the timer allows the connection and supply of the video signal from the outside unit to the inside monitor apparatus for a predetermined time interval, which depending on the selected components is of about 90 seconds. However, should a connection be required with another inside user and another call pushbutton is pressed while the timer is still energized, the RC circuit is operated, such a circuit comprising the capacitor C9 (for example of 22 MF) and resistance R 16 (for example of 2.2 Kohm) determining a time constant of about 0.2 seconds. Therefore, at the supply output P a potential drop of 0.2 seconds is provided whenever the call pushbutton is pressed. This is shown in Fig. 5. Therefore, either at timing end, or in case that pressing of another pushbutton is provided during the connection with an inside user, the shut off is caused for the transistor T3 of Fig. 4. Therefore, the image will not be shown on the kinescope of the previously connected inside monitor apparatus.

The circuit provides expedients for removing background noise in speech, as return of video circuit supply current has to be placed in common with the phonic current through the negative N supply pole. Said expedients are as follows:

- the filter capacitor C3 (of about 2200 MF) has been connected in the monitor apparatus downstream transistor T3;

- in the outside unit the supply is stabilized by the device STAB of Fig. 3 both in voltage and current; and

- still in the outside unit, the supply for the electronic doorkeeper PE is decoupled from the remainder circuit by the transformer TR (Fig. 3) with a ratio of 1:1.

Finally, Fig. 7 shows the modifications made to the circuit for enabling the video signal supply when there are a plurality of inside monitor apparatuses. In this case, the wires terminating at terminals V1 and V2 should be caused to pass through impedance adaptors having one input and a plurality of outputs.

A preferred embodiment uses for image pickup a standard television camera tube of 2/3", while using for reception a kinescope of 4.5" and 7.5".

It will be appreciated that by this useful circuit of reduced cost the transmission is obtained for all of the useful signals in a videointerphone system without any further intermediate device or equipment or coaxial cable, which is instead although partly required in pre-existent systems.

COMELIT Compagnia Elettronica Italiana S.p.A.

24020 ROVETTA S. LORENZO (Bergamo) Italy


C L A I M S


1.       A method for processing useful signals in a four wire (V1, V2, P, N) videointerphone system, inter alia performing the functions of:

(a) audio call signal;

(b) phonic exchange for forward and backward messages;

(c) transmission of door lock opening signal; and

(d) transmission and reception of the video signal between the outside central unit and at least one inside monitor apparatus, further using as mammy wires (C1, C2) as the connected inside monitor apparatuses (B1, B2), characterized in that power is supplied through two wires (P, N), the audio call signal and phonic exchange for forward and backward messages as well as transmission of door opening signal is supplied through a further wire (C1, C2), and finally the video signals taken by the television camera (TC) are resolved by a video-differential amplifier device (IC1) into two complementary signals and supplied in analogue form to the inside monitor apparatuses (B1, B2) on two standard wires (V1, V2).


2.       A method according to Claim 1, characterized in that the video signal supplied by the outside unit is reformed or recombined by comparing the two complementary signals on the wires through a video-differential amplifier device (IC1) identical to that in the outside central unit.

3.      An electric circuit for carry out the method according to Claim 1, characterized by providing in the outside unit a video-differential amplifier device (IC1) having two complementary outputs for supplying video signals on the two wires (V1, V2), while in each inside monitor apparatus (B1, B2) an identical video-differential amplifier device (IC1) is provided for reforming or recombining the video signal thus obtained.

4.      An electric circuit according to Claim 3, characterized in that each inside monitor apparatus (B1, B2) is provided with at least one switch device, connected to supply by known components and to the wires having the video signals transmitted over them to enable supply of video signals to the kinescope (12) in each inside monitor apparatus (B1, B2) only if particular conditions occur.

5.      An electric circuit according to Claim 3, characterized in that a timer device (T) is provided in the central unit (PE) and acts upon the power supplied to the inside monitor apparatus for determining a time interval, during which the inside monitor apparatus (B1, B2) receives from the outside unit the video signal supplied by the television camera (TC).

6.      A device according to Claim 3, characterized by providing a RC circuit for operation when a pushbutton (PC) in the outside unit is pressed for calling another inside monitor apparatus (B1, B2), so as to cause a voltage fall in the power or supply for a predetermined time interval.

7.      An electric circuit according to Claim 6, characterized by the provision in the inside monitor apparatus (B1, B2) of a switch device at the supply wires for sensing the lowering in supply level and signalling it to the other components of the apparatus for keeping the image secret.

8.      An electric circuit according to Claim 3, characterized by further connecting a filter capacitor in the inside monitor apparatus (B1, B2).

9.      An electric circuit according to Claim 3, characterized in that in said outside central unit the part relating to call, phonic exchange for messages and audio call signal is decoupled from the remainder circuit by a transformer (TR) having a ratio of 1:1.

FIG.1

FIG.3

2/2

0121757

FIG.2

FIG.5

FIG.4

FIG.7

FIG.6

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | FR-A-2 496 377 (URMET SPA)<br><br>* Page 3, lines 3-23; page 6, lines 27-33; page 8, lines 11-21 * | 1-4,6-8 | H 04 N 7/18 |
| | --- | | |
| A | FR-A-2 494 064 (PFISTER)<br>* Page 2, line 26 - page 3, line 9 * | 1 | |
| | --- | | |
| A | FUNKSCHAU, vol. 48, no. 23, November 1976, pages 1013-1014, Munich, DE; R. BÜCKEN: "AV und EDV als Fahndungshelfer"<br>* Page 1013, left-hand column, last paragraph - centre column, line 16 * | 1-3 | |
| | --- | | **TECHNICAL FIELDS SEARCHED (Int. Cl. ³)** |
| A | FUNKSCHAU, vol. 52, no. 8, April 1980, pages 63-66, Munich, DE; H. SELMAYR: "Türfernsehanlagen"<br>* Page 64, right-hand column, last paragraph - page 65, line 28 * | 4-7 | H 04 N 7/00<br>H 04 M 11/00 |
| | --- | | |
| A | DE-A-1 926 314 (HEIDER GmbH)<br>* Page 6, last line - page 7, line 26; page 9, lines 18-21 * | 9 | |
| | ----- | | |

The present search report has been drawn up for all claims

| Place of search | Date of completion of the search | Examiner |
|---|---|---|
| THE HAGUE | 22-06-1984 | DE ROECK A.F.A. |